# EUROPEAN PATENT SPECIFICATION

(11) **EP 1 278 700 B1**
(45) Date of publication and mention of the grant of the patent: **09.11.2005**
(21) Application number: 00931268.7
(22) Date of filing: 21.04.2000
(51) Int. Cl.: C01B 3/32

(54) **HYDROGEN DERIVED FROM METHANOL CRACKING IS USED AS A CLEAN FUEL FOR POWER GENERATION WHILE REINJECTING CO-PRODUCT CARBON DIOXIDE**
AUS METHANOL HERGESTELLTER WASSERSTOFF ALS SAUBERER BRENNSTOFF ZUR ENERGIEERZEUGUNG MIT RÜCKFÜRHUNG VON KOHLENDIOXIDCOPRODUKT
UTILISATION D'HYDROGENE TIRE DU CRAQUAGE DU METHANOL COMME COMBUSTIBLE PROPRE EN PRODUCTION D'ENERGIE AVEC REINJECTION DU DIOXYDE DE CARBONE CO-PRODUIT

(43) Date of publication of application: 29.01.2003
(73) Proprietor: Institut Français du Pétrole, 92852 Rueil-Malmaison Cedex (FR)
(72) Inventor: MINKKINEN, Ari, F-78860 Saint Nom La Breteche (FR); JONCHERE, Jean-Pierre, F-78380 Bougival (FR)
(86) International application number: PCT/EP2000/004876
(87) International publication number: WO 2002/004347

(56) References cited:
- DE-A- 19 618 816
- US-A- 5 261 490
- PATENT ABSTRACTS OF JAPAN vol. 012, no. 186 (C-500), 31 May 1988 (1988-05-31) & JP 62 292602 A (KAO CORP), 19 December 1987 (1987-12-19)
- PATENT ABSTRACTS OF JAPAN vol. 018, no. 027 (M-1543), 17 January 1994 (1994-01-17) & JP 05 263613 A (MITSUBISHI HEAVY IND LTD), 12 October 1993 (1993-10-12)
- PATENT ABSTRACTS OF JAPAN vol. 1996, no. 04, 30 April 1996 (1996-04-30) & JP 07 315825 A (IDEMITSU KOSAN CO LTD), 5 December 1995 (1995-12-05)

## Description

### BACKGROUND

Power generation in the industrial world today is being conducted more and more by burning ever-cleaner fuels. Natural gas, due to its clean burning qualities, is the fuel of choice for the most recent large power plants. Compared too heavier hydrocarbon fuels and especially coal, it gives far less C02 emissions. This factor has today become a very hot issue as the world is increasingly concerned about the global warming attributed to greenhouse gases, such as C02, emissions. In some countries, notably Norway, taxes are being imposed on carbon fuels combustion to provide clear incentives for industry wide reduction and/or elimination of C02 emissions: The tendency for more legislative control is expected to become more and more generalized in the next century as hydrocarbons, notably natural gas, consumption as a combustion fuel is increasing at an alarming rate.

Fortunately, proven reserves of natural gas are increasing at a comfortable rate more than sufficient to keep up with the demand. However, new reserves are not always found in the easiest environment nor reservoir volumes required for economically feasible production. To exploit these remote, sometimes stranded gases reserves, far from the traditional markets, a number of strategies are being considered. Most call for the conversion of the gas to liquids (GTL) to facilitate the transport to market when pipelining is economically prohibitive. Among the most common GTL techniques are the liquefaction of natural gas and the chemical conversion via synthesis gas to heavier paraffinic hydrocarbons using the well known Fischer Tropsch chemistry. Another viable GTL route is the conversion of the natural gas to methanol. This route is gaining favor, as methanol is easy to ship and can be flexibly used as an intermediate in the petrochemical industry, a direct or chemical comportment in motor fuels or be burned directly as a clean fuel. A renewed interest in the methanol based GTL route and its wider application would have a dramatic downward impact on the price of methanol which today is already quite low (i.e. below 100 $/ ton). It would not be hard to predict that methanol produced as a bulk commodity from low or no value stranded gas could eventually be priced well below regasified LNG or even below pipeline gas.

In such a scenario and with the presumption of ever-stricter legislative and fiscal pressure to reduce C0₂ emissions, the industrial power generation sector should well consider methanol as the future fuel of choice. Methanol is readily converted to hydrogen and C0₂ by steam cracking or reforming. C0₂ can be easily removed from the decomposed effluent at pressure by known techniques, thus liberating nearly pure hydrogen as a fuel for power generation and/or chemical export combustion of hydrogen releases only water vapor, thus C0₂ emissions can be essentially avoided. The C0₂ removed at high pressure can be safely reinjected to a suitable disposal reservoir. This is the practice in growing number of acid gas removal installations around the worried; one example of which is the Sleipner gas project in the Norweglan sector of the North Sea.

### THE INVENTION

The invention to be described in detail in this disclosure concerns the production of power and hydrogen from the conversion of methanol as the principal plant feed. The indirect use of methanol via hydrogen to power generation assures an essentially C0₂ free exhaust gas making the power generation step as environmentally clean as possible.

The basic chemical reaction for the conversion of methanol is well known as given below:

CH₃OH + H₂O = CO₂ + 3 H₂

The reaction is endothermic requiring approximately 60 kj/mole of heat input. The reaction can be achieved to near completion at moderate temperatures (i.e. 200 to 300°C) with appropriate catalyses formulations known to those skilled in the art. The reaction can also take place thermally without catalyst but at higher temperatures (i.e. over 350°C) The latter is often called methanol cracking and is conducted conventionally in tubes of radiant fired furnaces in like manner as practiced for steam cracking of ethane to produce ethylene.

The invention, to be described, consists of a novel combination of jet engine and gas turbine technologies to furnish the reaction heat requirements as well as the power recovery to electricity generation. Moreover, the invention incorporates a refrigerated methanol solvent-based C0₂ removal process to clean the hydrogen before its use as gas turbine (jet engine) fuel. The C0₂ removal process can use the waste heat from the turbine exhaust to provide the refrigeration via a conventional adsorption refrigeration process such as lithium bromide solution well known to those skilled in the art.
The use of methanol as a solvent simplifies the overall process and allows the methanol feed to serve also as an anti-freeze in the subsequent cold processing to remove C0₂. These aspects of methanol use in gas processing are described in U.S. Patents, 4,775,395 and 4,979,996 of October 1986 and September 1988 respectively, granted to IFP (Rojey et al.). The C0₂ is liberated from pure methanol solvent by simple pressure reduction flashes without need of any thermal energy. The recovered C0₂ is dry and available at pressures well above atmospheric so compression to reinjection conditions is greatly facilitated.

As concluded by the example highlighted in this disclosure, one megawatt hour of power production is achieved by charging the plant with about 550 kg/hr. (100 BPD) of methanol and 350 kg/hr. (50 BPD) of demineralized water. In this sense, water appears to be converted to combustible fuel hydrogen.

### PROCESS FLOW DESCRIPTION

The principal embodiments of this invention can be best understood with the process flow description of the Figures land 2 hereafter depicting schematically one preferred option of the invention.

### Feed Reception

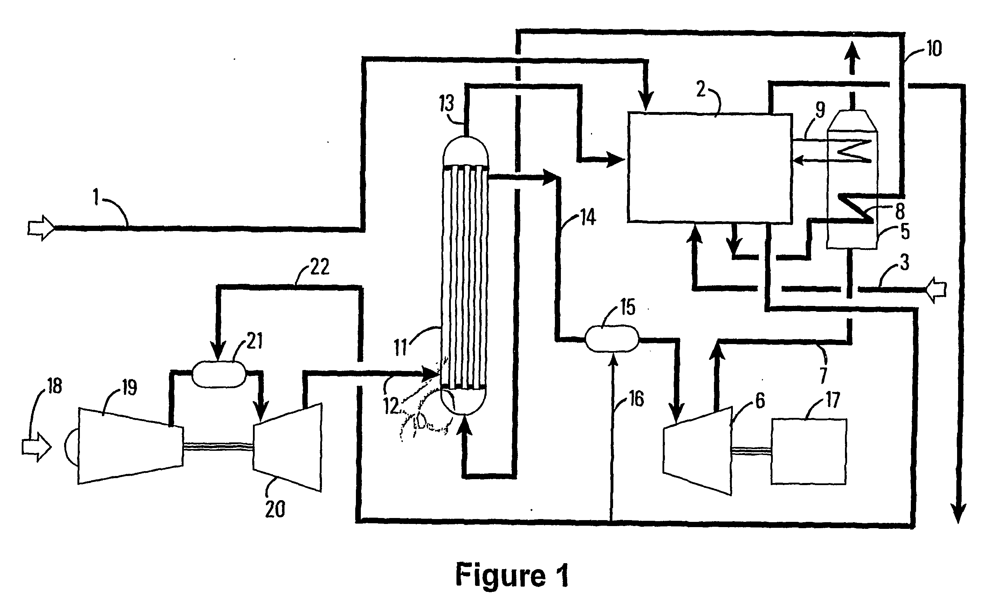

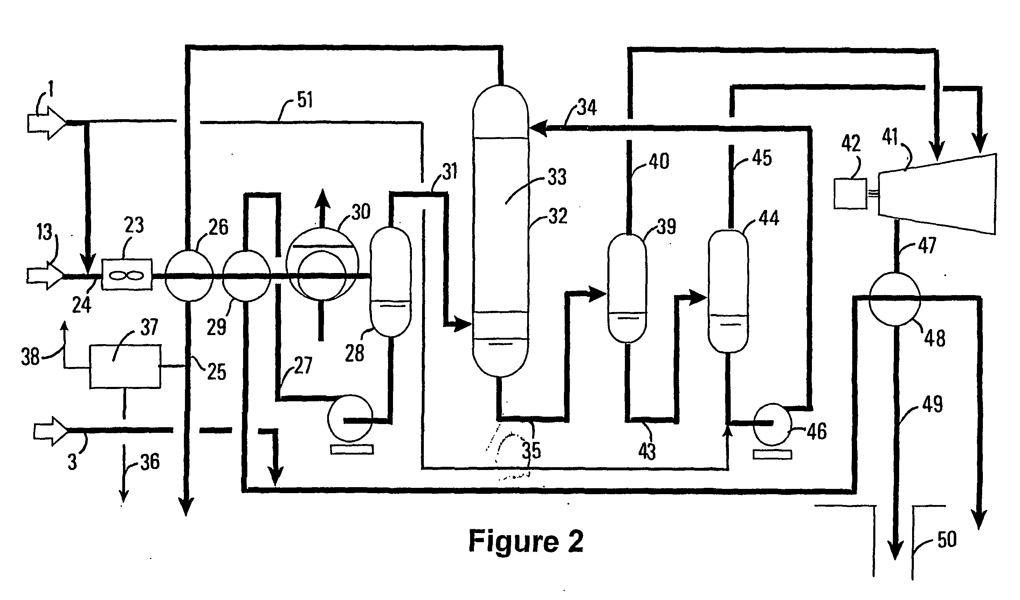

In Figure 1, methanol feed, stream 1, is received at a suitable pressure from battery linnets. The feed stream is passed to the cold process used for reactor effluent treatment in the process block 2 to be described later with Figure 2. To this process is added demineralized water, stream 3, to be shown in Figure 2. The resulting liquid from block 2 laves as stream 4. It is the principal feed to the reaction composed of the fresh methanol charge from stream 1 and the fresh water charge from stream 3 together with a recycle of unconverted methanol and water and other dissolved trace components such as CO, C02, methane and higher alcohols. This stream is then passed to the waste heat recovery boiler 5 connected with the power recovery turbine 6. The hot clean exhaust gas, stream 7, is cooled by the vaporization of the methanol and water and other components in stream 4 in the convection coil 8 of the waste heat boller 5. The flue gases can be further cooled by giving heat directly or indirectly to the adsorption refrigeration reboiler within the cold process block 2.in the convection coil 9 of the waste heat boiler.

### Methanol Cracking Reaction

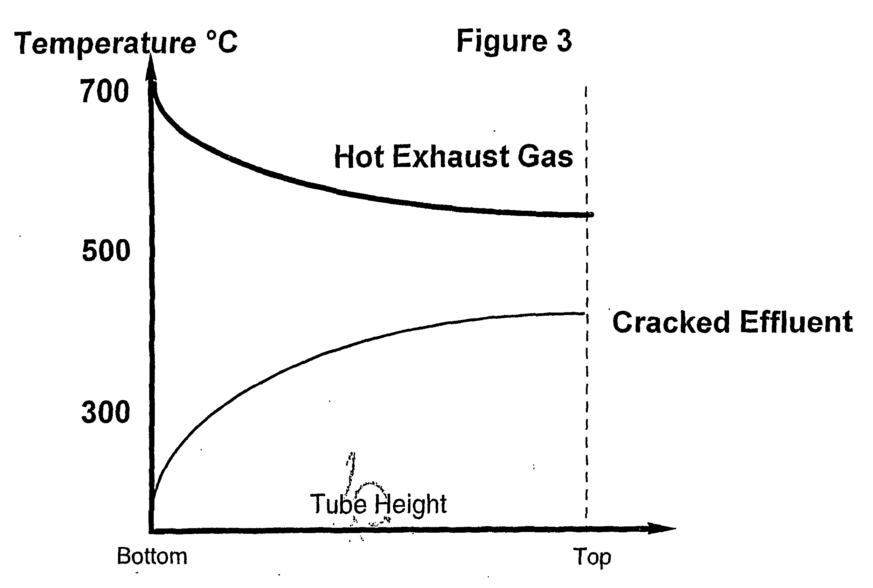

The vaporized fresh and recycle feed stream 10 at suitable conditions is passed to the bottom tube channel end of a novel heat exchange / reactor 11. The heat for the continued heating and endothermic reaction requirements for the methanol cracking reaction is provided by very hot jet engine (or gas generator part of a gas turbine) exhaust in stream 12 origin of which will be described later. The hot gas flows co-currently in the shell side of the reactor / exchanger against the reaction feed vapor upflowing in the tube side. A more or less square temperature profile of the reaction fluids is induced by the concurrent heat exchange as depicted in Figure 3 here after. Upon existing the top tube channel end of the exchanger / reactor, the reactor effluent, stream 13, is passed to the recovery and treatment process of the process block 2. The hot vapor effluent consists of hydrogen, C0₂, some CO, methane and unreacted methanol and water in the form of steam.

The hot gas exiting the top section of the shell side of the exchanger / reactor as stream 14 is about 50 to 100°C warmer than the reactor effluent, stream 13. This stream is passed to a post combustion chamber 15 wherein its temperature is restored to a higher level (preferably to the same level as stream 12) by burning additional hydrogen fuel, stream 16 originating from the recovery process of block 2. The hot gas still at approximately jet engine exhaust pressure less pressure drops is then passed to the suction of the power recovery turbine 6 mentioned before. The power recovery turbine drives on the saine shaft an electric power generator 17 or any other suitable rotating machine.

### Hot Gas Generation

Turning now to the hot gas generation section of the process, atmospheric air, stream 18, is taken to the suction of an axial flow compressor 19 driven by an integral power recovery turbine 20 in like manner as in a commercial jet engine or gas generator part of an industrial or aeroderivative gas turbine machine. The air is compressed to a suitable pressure (i.e. 20 to 40 bar) and passed to the integral combustion chamber (or chambers) 21 of the jet engine or gas generator. Hydrogen fuel gas at a suitable pressure is admitted to the combustion chamber by stream 22 raising the temperature of the pressurized air to very high level before expanding it to a lower level in power turbine 20. This level depends on the power extraction of the axial compressor 19 connected directly to the shaft of the power recovery turbine. The still very hot exhaust at around 6 to 7 bar then becomes the hot stream 12, used in the reactor / exchanger 11 previously described.

### Effluent Treatment and Recovery

Turning now to the hydrogen recovery and effluent treatment section of the invention, reference is made to the process flow depicted schematically in Figure 2.

The hot reactor effluent vapor stream 13 is directly quenched by the fresh feed methanol stream 1 thereby rapidly cooling the effluent while vaporizing some methanol. This rapid quench is necessary to avoid unwanted side reactions. The mixed stream at lower temperature is further cooled by air cooler 23 to ambient temperature while condensing the bulk of the water and methanol in the mixed stream 24. Further chilling of the n-extra is accomplished by heat exchange with the product hydrogen stream 25 in heat exchanger 26, by chilled liquid stream 27 pumped from the cold separator drum 28, in heat exchanger 29 and finally in chiller 30, operating on an adsorption refrigeration cycle such as provided by lithium bromide solution.(the chiller can also operate on a conventional mechanically powered propane cycle). The condensed liquid, stream 27, is separated from the vapor phase, stream 31, in the separator drum 28 already mentioned. The vapor stream 31 consists in principal of the hydrogen and CO₂ formed by the reactor. It also contains some CO, methane, methanol and saturation water. Due to the presence of the methanol feed in the condensed liquid its concentration is adequate to prevent hydrates and freezing in the upstream heat exchangers.

### C0₂ Removal and Hydrogen Recovery

The cold raw hydrogen stream 31 is passed to the bottom of an absorption column 32 fitted with suitable mass transfer elements 33 (packing or trays) to effect upon contact with cold pure methanol a removal of the substantial part of the C0₂ contained in the gas. The gas flows upward against the counter-current flow of cold methanol solvent admitted to the top of the column by stream 34. The solvent rich in C0₂ leaves the bottom of the column as stream 35 at somewhat higher temperature than the top of the column. The higher temperature is the result of solution heat effects. Meanwhile the product hydrogen is removed from the top of the column containing very little C0₂ as stream 25 already mentioned. This stream also contains any side reaction formed CO and methane as well as vapor pressure methanol, all of which will result in the formation of C0₂ upon combustion of the hydrogen stream. To remove these impurit'les effectively a pressure swing adsorption PSA hydrogen purification can be considered but this is outside the present scope of this disclosure as these systems are well known to those skilled in the art. In any case, for the production of a slipstream of hydrogen, stream 36, for export, if desired, a PSA or equivalent system 37 can be added. The purge gas stream 38 from this system containing lost hydrogen and the impurities would still need to be used as C0₂ producing fuel gas lest it be also reinjected to a disposal well as with the bulk of the removed C0₂.

### Solvent Regeneration

Turning now to the regeneration of the C0₂ laden methanol in stream 35. The stream is passed to the first flash separator drum 39 operating at somewhat lower pressure than the absorption column 32. A substantial part of the absorbed C0₂ is released to the gas stream 40, exiting the drum. Upon flashing the cold temperature of the solvent circulation is essentially restored due to the vaporization of C0₂ (i.e. auto-refrigeration). The cold flash gas, stream 40, is taken to an appropriate lateral side stream entry nozzle of the C0₂ reinjection compressor 41 driven by electric motor 42. The resulting leaner solvent stream 43 leaving the first flash drum is passed to the second or final flash drum 44 operating at still lower pressure than the first. The remaining C0₂ is liberated in this drum at somewhat lower temperature than the first flash. The flashed gas stream 45 leaving this drum is taken to the suction of the C0₂ reinjection compressor mentioned above. The very cold lean solvent, stream 34, is then pumped by motor driven pump 46 to the top of the absorption column 32 to continue the C0₂ absorption.

### C02 Compression and reinjection

The discharge stream 47 from the compressor at an appropriate reinjection wellhead pressure is cooled by pre-heating reaction feed stream 4 (already mentioned) in heat exchanger 48. The feed stream consists of the warmed condensed effluent and fresh methanol together with the demineralized water reactant introduced by stream 3. In this way the heat of the compressed C0₂ serves to preheat the entire reaction feed before its vaporization in the waste heat boiler 5 previously mentioned. Cooled compressed C0₂ stream 49 is rejected to the reinjection well 50 at an appropriate pressure.

To account for vapor pressure losses of methanol with the various streams notably product hydrogen, stream 25 and compressed C0₂, stream 47 a small slipstream of make-up methanol is removed from the methanol feed and is introduced to the suction of the lean methanol pump 46 by line51.

### Example

Consider as an example the production of electric power from methanol converted to hydrogen using a commercially available gas generator from a GE Frame 7 gas turbine machine. Ordinarily this machine could produce up to 80 megawatts (MW) of power at near iso conditions.

The axial compressor 19 will aspirate 845 t/h of ambient air, which will be compressed to around 18 bar and raised to a temperature of around 1200°C by the addition of 6 t/h of hydrogen rich fuel to the combustion chamber 21. After expansion in the power wheel 20 the gas exits at around 6 bar and 700°C to be used in the reactor/exchanger as a convective heat source.

In this example the post combustion 15 will use another 2 t/h of hydrogen rich fuel giving a total hydrogen rich gas production requirement of 8 t/h or around 90,000 Nm3/h of without considering hydrogen export.

To produce such an amount of hydrogen from the methanol cracking reaction and assuming a selectivity of 98% requires a feed rate of around 45 t/h or 8000 barrels per day (BPD) of methanol and roughly 29 t/h (4400 BPD) of demineralized water. With an once-through conversion of 800/o and a steam to methanol ratio of around 2 mol/mol. the overall reaction feed including equilibrium recycle becomes around 110 t/h out of which around 60 t/h is methanol the rest is basically water. To fully vaporize this stream at around 24 bar which becomes available at approximately 120°C after preheat exchanges requires approximately 53 Gcal/h of convective waste heat in the waste heat boiler 5. This is furnished by the hot exhaust gas leaving the power recovery turbine 6 at roughly 530°C and 1.2 bar with a flow rate of 853 t/h. The exhaust gas is cooled to 300°C by the convection coil 8. Further cooling to around 200°C in coil 9 liberates around 21 Gcal/h of duty to be used for an adsorption refrigeration system within the cold process.

Meanwhile the 110 t/h of vaporized feed leaves the boiler coil 8 at 250°C and 24 bar and is passed to the bottom of the reactor/exchanger 11. To this exchanger is introduced the hot gas at 700°C and 6 bar to the bottom shell side inlet. This gas is then used co-currently to heat and provide the endotherm of the reaction calling for about 40 Gcal/h at 23 bar for a 400°C effluent outlet temperature. Consequently the hot gas leaves the shell side of the reactor/exchanger at around 520°C and 5.1 bar. It is directly passed to the post combustor 15 to which is admitted the 2 t/h of hydrogen rich fuel already mentioned above. The exhaust gas is reheated to 700°C in the post combustor before being introduced to the suction of the power recovery turbine 6 at around 5 bar and 700°C. The expansion of 853 t/h of this hot gas to approximately 1.2 bar and around 530°C already mentioned above gives roughly 90 MW of power for electricity generation.

### Effluent treatment and recovery

The 45 t/h of methanol feed is directly injected to the reactor effluent as a quench cooling the mixture to about 260°C while vaporizing a substantial part of the methanol feed. The mixture is passed to the air cooler 23, which removes 23 Gcal/h of heat while condensing the major portion of the water and methanol in the mixture. Further cooling in exchanger 26 and 29 of 1.0 and 3.4 Gcal/h respectively brings the temperature down to about O°C while condensing some more water and methanol. The presence of methanol in the condensed water is such that no hydrates nor ice is formed. Finally the chiller 30 is used to drop the mix temperature down to around minus 20°C by a refrigeration system absorbing around 5.0 Gcal/h of heat. This could be provided in a lithium bromide absorption refrigeration system regenerated with less than 20 Gcal/h of low level (i.e. about 150°C) heat.

Around 81 t/h of cold condensed liquid is removed from the separator drum 28 to be pumped through the heat exchanger 29 where the temperature is increased to 30°C. To this liquid effluent is admixed 29 t/h of demineralized water from battery linnets. The 110 t/h of solution at around 35°C is next passed to the C0₂ compressor discharge cooler 48 wherein 5.0 Gcal/h of heat is added by cooling the hot compressed C0₂ to around 50°C. The preheated liquid then leaves the exchanger at around 120°C and 25 bar as previously mentioned.

Around 74 t/h of vapor exiting the cold separator drum 28 is passed to the C0₂ absorption column 32 to be washed with cold methanol. Around 280 t/h of pure methanol at around minus 25°C is circulated to the top of the absorption column. Approximately 8.0 t/h of hydrogen rich gas containing less than 2.0 vol% C0₂ leaves the top of the absorption column at around minus 20°C. and 20 bar. The gas is heated in exchanger 26 to 40°C before being used as fuel gas in the gas generator and post combustion system.

The 346 t/h of rich solution at a temperature of around minus 15°C is passed to the first flash drum 40 operating at 10 bar pressure, 32 t/h of C02 rich gas is liberated at essentially minus 20°C. This stream is taken to the side nozzle of the C0₂ compressor 42. The remaining 34 t/h of C0₂ rich gas is liberated in the second flash drum 45 operating at 2.0 bar pressure. The resulting flash drops the temperature of this drum down to minus 25°C while giving 280 t/h of lean solvent essentially free of C0₂. The lean solvent pump consuming 250 KW recirculates the solvent to the top of the absorption column.

The low pressure gas is taken to the suction of the C0₂ compressor which is driven by an electric motor consigning roughly 5.0 MW while compressing both flash gas streams rich in C0₂ to around 150 bar rejection pressure.

| ***MATERIAL BALANCE*** | | |
|---|---|---|
| | **Kg/h** | **KgMoles/h** |
| Feeds | | |
| Methanol | 45,000 | 1406 |
| Water | 29,000 | 1611 |
| **Total** | **74,000** | **3017** |

| Products | | |
|---|---|---|
| Hydrogen Rich Gas (98%Mol) | 8,000 | 4000 |
| CO₂ Rich Gas | 66,000 | 1500 |
| **Total** | **74,000** | **5500** |

| ***POWER BALANCE*** | | |
|---|---|---|
| **KWh/h** | | |
| Production | | 90,000 |
| Consumption | | 8,000 |
| Net Production | | 82,000 |
| **Net Electric Export → 80 Megawatts** | | |

## Claims

1. Use of hydrogen, substantially free of CO₂, which has been produced in a stream cracking or in catalytic or non-catalytic cracking, or in a reforming process of methanol, as a fuel for power generation or chemical export, i.e. as jet engine or gas turbine while CO₂ which as also been produced in the steam cracking or in the cracking or in the reforming process of said methanol, is removed from the decomposed effluent of the said steam cracking or cracking or reforming process is injected to a suitable disposal reservoir, hence avoiding the presence of CO₂ in said power regeneration or in said chemical export.

2. Process according to claim 1 wherein the manufacture of hydrogen from methanol is combined with the jet engine or gas turbine technologies in order to get the reaction heat requirements from the jet engine or gas turbine as well the power recovery to electricity generation.

3. Process according to claim 2 wherein moreover the process incorporates a refrigerated methanol solvent based CO₂ removal process to clean the hydrogen before its use as gas turbine or jet engine fuel.

4. Process according to one of claims 1 to 3, wherein the CO₂ removal process uses the waste heat from the turbine exhaust to provide the refrigeration via an adsorption refrigeration process.

5. Process according to claim 4, wherein the use of methanol as a solvent allows the methanol feed to serve also as an anti-freeze in a subsequent cold processing to remove CO₂.

## Patentansprüche

1. Verwendung von Wasserstoff, im Wesentlichen frei von CO₂, welcher erzeugt worden ist in einem Dampfkracken oder in katalytischen oder nichtkatalytischen Kracken oder in einem Reformierungsverfahren von Methanol als Treibstoff zur Stromerzeugung oder chemischen Export, das heißt als Düsentriebwerks- oder Gasturbinentreibstoff, während CO₂, welches auch beim Dampfkracken oder Kracken oder im Reformierungsverfahren des Methanols erzeugt worden ist, vom zersetzten Abstrom des Dampfkrackens oder Krackens oder Reformierungsverfahrens entfernt, und in einen geeigneten Aussonderungstank eingespritzt wird, weshalb die Gegenwart von CO₂ in der Stromerzeugung oder dem chemischen Export vermieden wird.

2. Verfahren nach Anspruch 1, worin die Herstellung von Wasserstoff aus Methanol kombiniert wird mit den Düsentriebwerks- oder Gasturbinentechnologien, um die Reaktionswärmeerfordernisse des Düsentriebwerks oder Gasturbine sowie Leistungsausbeute für Elektrizitätserzeugung zu erhalten.

3. Verfahren nach Anspruch 2, worin das Verfahren weiterhin ein auf CO₂-Entfernungsvorgang basierendes gekühltes Methanollösungsmittel einschließt, um den Wasserstoff vor seiner Verwendung als Gasturbinen- oder Düsentriebwerkstreibstoff zu reinigen.

4. Verfahren nach einem der Ansprüche 1 bis 3, worin das CO₂-Entfernungsverfahren die Abwärme von dem Turbinenauspuff verwendet, um die Kühlung über ein Adsorptions-Kühlverfahren zu ergeben.

5. Verfahren nach Anspruch 4, worin die Verwendung von Methanol als Lösungsmittel es dem Methanol erlaubt, auch als Antigefriermittel in einer nachfolgenden Kältebearbeitung zu dienen, um CO₂ zu entfernen.

## Revendications

1. Utilisation d'hydrogène, essentiellement exempt de CO₂, ayant été produit dans un vapocraquage, un craquage catalytique ou non catalytique ou un procédé de réformage du méthanol, comme combustible pour la génération de puissance ou comme produit chimique exporté, par exemple comme combustible pour moteur d'avion ou pour turbine à gaz, alors que le CO₂, qui a aussi été produit dans le vapocraquage, le craquage ou le procédé de réformage dudit méthanol, est enlevé de l'effluent décomposé dudit vapocraquage, craquage ou procédé de réformage et est injecté dans un réservoir approprié à disposition, évitant ainsi la présence de CO₂ dans ladite génération de puissance ou ledit produit chimique exporté.

2. Procédé selon la revendication 1, dans lequel la fabrication d'hydrogène à partir de méthanol est combinée avec les technologies de moteur d'avion ou de turbine à gaz pour obtenir la chaleur de réaction requise à partir du moteur d'avion ou de la turbine à gaz, ainsi que la récupération de puissance pour la génération d'électricité.

3. Procédé selon la revendication 2, dans lequel le procédé comprend de surcroît un procédé d'enlèvement du CO₂ basé sur un solvant méthanol réfrigéré pour épurer l'hydrogène avant son utilisation comme combustible de turbine à gaz ou de moteur d'avion.

4. Procédé selon l'une des revendications 1 à 3, dans lequel le procédé d'enlèvement du CO₂ utilise la chaleur perdue de l'effluent de la turbine pour fournir la réfrigération via un procédé d'adsorption réfrigération.

5. Procédé selon la revendication 4, dans lequel l'utilisation de méthanol comme solvant permet à la charge de méthanol de servir comme antigel dans un procédé subséquent de traitement à froid pour enlever le CO₂.
